# EUROPÄISCHE PATENTANMELDUNG

(11) **EP 0 987 154 A2**
(43) Veröffentlichungstag der Anmeldung: **22.03.2000**
(21) Anmeldenummer: 99114995.6
(22) Anmeldetag: 31.07.1999
(51) Int. Cl.: B60S 1/08

(54) **Für ein Kraftfahrzeug bestimmter Scheibenwischer**

(30) Priorität: 19.09.1998 DE 19843050
(71) Anmelder: Mannesmann VDO Aktiengesellschaft, 60388 Frankfurt am Main (DE)
(72) Erfinder: Lässle, Hans-Peter, 61250 Usingen (DE)
(74) Vertreter: Rassler, Andrea, Dipl.-Phys.

(57) **Zusammenfassung**

Bei einem für ein Kraftfahrzeug bestimmten Scheibenwischer (1) mit einem drehzahlüberwachten Wischermotor (2) und einem Bedienelement (10) zur Vorgabe eines gewünschten Wischmodus sind Sensoren (4, 5, 6, 7) zum Erfassen von Umgebungseinflüssen vorgesehen, die an einem Regler (8) zum Erzeugen eines Drehzahlbefehls in Abhängigkeit von diesen Umgebungseinflüssen angeschlossen sind.

## Beschreibung

Die Erfindung betrifft einen für ein Kraftfahrzeug bestimmten Scheibenwischer mit einem drehzahlüberwachten Wischermotor und mit einem Bedienelement zur Vorgabe eines gewünschten Wischmodus sowie einem zwischen dem Bedienelement und dem Wischermotor geschalteten Regler zum Regeln der Drehzahl des Wischermotors aufgrund von Sensorsignalen.

Scheibenwischer der vorstehenden Art sind bekannt. Sie bieten gegenüber üblichen Scheibenwischern den Vorteil, dass während des Wischbetriebes größere Schwankungen der Geschwindigkeit der Scheibenwischer vermieden werden. Solche Geschwindigkeitsänderungen treten beispielsweise durch unterschiedliche Reibbedingungen aufgrund unterschiedlicher Benetzung der Windschutzscheibe oder durch die Gestaltung des Wischergetriebes auf. Sie werden allgemein von den Benutzern eines Kraftfahrzeugs als störend empfunden.

Die Regelung des bekannten Scheibenwischers erfolgt derart, dass auch unter unterschiedlichen Bedingungen die über das Bedienelement eingegebene Wischergeschwindigkeit konstant gehalten wird. Der Fahrer muss deshalb entscheiden, welche Wischergeschwindigkeit jeweils angebracht ist. Das verlangt ein genaues Beobachten des Wischvorganges und lenkt den Fahrer deshalb vom Verkehrsgeschehen ab. In der Praxis ändern sich die Umgebungseinflüsse, welche für den Wischvorgang bestimmend sind, oftmals sehr rasch und häufig, beispielsweise beim Überholen eines Lastkraftwagens im Regen, so dass der Fahrer genötigt ist, relativ oft am Bedienelement die Wischergeschwindigkeit zu verstellen.

Der Erfindung liegt das Problem zugrunde, einen für ein Kraftfahrzeug bestimmten Scheibenwischer so zu gestalten, dass seine Wischgeschwindigkeit sich selbsttätig unterschiedlichen Umwelteinflüssen anpasst.

Dieses Problem wird erfindungsgemäß dadurch gelöst, dass die Sensoren zum Erfassen von Umgebungseinflüssen ausgebildet sind und der Regler zum Erzeugen eines Drehzahlbefehls in Abhängigkeit von diesen Umgebungseinflüssen ausgebildet ist.

Bei einem solchen Scheibenwischer vermag sich die Wischgeschwindigkeit unabhängig von der Fahrervorgabe unterschiedlichen Umwelteinflüssen anzupassen. Dadurch braucht der Fahrer nicht mehr zu beobachten, ob das Wischergebnis optimal ist, so dass er hierdurch nicht vom Verkehrsgeschehen abgelenkt wird. Weiterhin muss der Fahrer nicht selbst entscheiden, welche Wischgeschwindigkeit jeweils optimal ist, weil durch die Erfindung die Wischerelektronik zu einem intelligenten System wird. Zusätzlich wird der Fahrer davon entlastet, die Wischergeschwindigkeit während der Fahrt zu verstellen, da aufgrund der Sensoren zum Erfassen von Umgebungseinflüssen der Scheibenwischer zu einem adaptiven System wird.

Besonders vorteilhaft ist es, wenn der Regler mit einem Sensor zur Erfassung der Geschwindigkeit des Kraftfahrzeugs verbunden ist. Zunehmende Geschwindigkeit führt zwangsläufig dazu, dass sich die Zahl der pro Zeiteinheit gegen die Windschutzscheibe gelangenden Regentropfen erhöht, so dass dank der Erfindung dann automatisch die Wischergeschwindigkeit zunimmt. Weiterhin kann bei einer solchen Regelung berücksichtigt werden, dass sich mit der Geschwindigkeit des Kraftfahrzeugs aufgrund von Windeinflüssen die Andrückkraft der Scheibenwischer gegen die Windschutzscheibe verändert.

Die bei zunehmendem Regen erforderliche Erhöhung der Wischgeschwindigkeit kann auch dadurch erreicht werden, dass der Regler mit einem Sensor zur Erfassung der Heftigkeit von Regen verbunden ist.

Bisher hat man zur Erfassung der Drehzahl von Wischermotoren deren Stromaufnahme ermittelt, was jedoch zu einer verhältnismäßig ungenauen Regelung führte. Da inzwischen für die Drehzahlüberwachung der Fahrzeugräder sehr genau arbeitende und kostengünstig erhältliche Drehzahlsensoren gebräuchlich sind, ist es für die Drehzahlüberwachung von Scheibenwischermotoren ebenfalls vorteilhaft, wenn der Wischermotor zur Erfassung seiner Drehzahl und/oder zur Erfassung der Position des Scheibenwischers einen Inkrementgeber hat. Durch diese Wegerfassung des Scheibenwischers kann die Geschwindigkeit des Scheibenwischers mit hoher Genauigkeit geregelt werden.

Ganz besonders optimal lässt sich ein Scheibenwischer hinsichtlich seiner Wischgeschwindigkeit regeln, wenn gemäß einer anderen Weiterbildung der Erfindung der Regler einen Kennfeldspeicher mit Weg-Zeit-Diagrammen zur Erzeugung von Sollwerten für die Geschwindigkeit des Scheibenwischers aufweist.

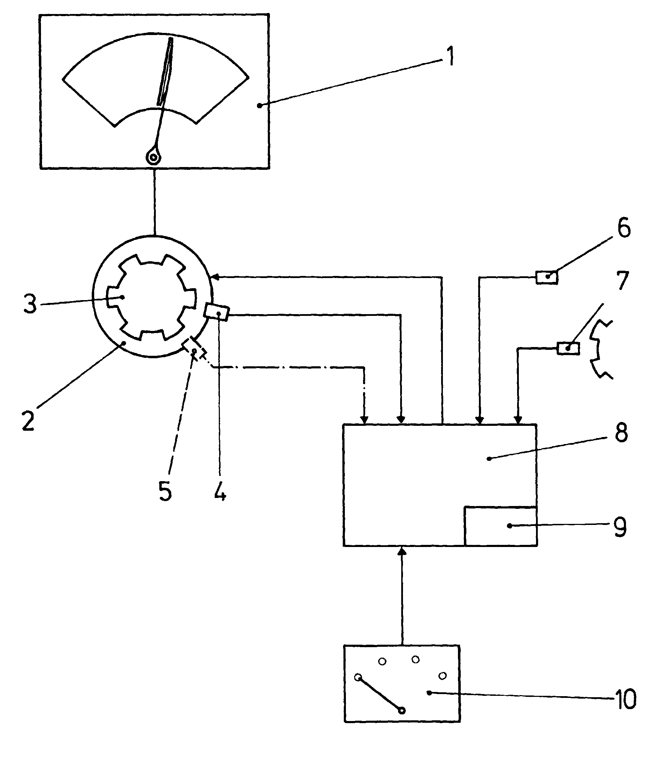

Die Erfindung lässt verschiedene Ausführungsformen zu. Zur weiteren Verdeutlichung ihres Grundprinzips ist eine davon schematisch in der Zeichnung als Blockschaltbild dargestellt und wird nachfolgend beschrieben.

Die Zeichnung zeigt einen Scheibenwischer 1, der von einem Wischermotor 2 angetrieben wird. Der Wischermotor 2 hat eine Zahnscheibe 3, welche synchron mit ihm umläuft und deren Umdrehungen von einem Sensor 4, bei dem es sich um einen Inkrementgeber z. B. einen Hall-Sensor handeln kann, erfasst werden. Strichpunktiert dargestellt wurde ein Positionssensor 5, der alternativ zur Drehzahlerfassung die Position des Scheibenwischers 1 überwachen kann. Die Anordnung kann weitere Sensoren aufweisen, beispielsweise einen Sensor 6 für die Überwachung der Umgebungstemperatur oder einen Sensor 7 für die Überwachung der Fahrgeschwindigkeit des den Scheibenwischer 1 aufweisenden Kraftfahrzeugs.

Die Signale der Sensoren 4, 5, 6, 7, werden einem Regler 8 zugeführt, der einen Kennfeldspeicher 9 aufweisen kann.

Zur Benutzung des Scheibenwischers 1 schaltet der Fahrer ein Bedienelement 10 in den von ihm gewünschten Wischmodus, also zum Beispiel eine bestimmte Wischgeschwindigkeit mit festgelegten Unterbrechungsintervallen. Der Regler 8 steuert dann den Wischermotor 2 an, so dass dieser anläuft. Der Sensor 4 misst die jeweilige Drehzahl des Wischermotors 2 und erhöht die ihm zugeführte elektrische Spannung, wenn die Drehzahl unterhalb des gewünschten Sollwertes sinkt. Zusätzlich verarbeitet der Regler 8 jedoch auch die Signale der die Umgebungseinflüsse überwachenden Sensoren 6 und 7 sowie gegebenenfalls weiterer Sensoren. Ergibt sich aus diesen Sensorsignalen, dass die Wischgeschwindigkeit erhöht werden muss, dann wird diese unabhängig von der Vorgabe des Fahrers angehoben. Ein Sollwertgenerator erzeugt aus der Bedienvorgabe und den Sensorsignalen einen Sollwert, der vom Regler verarbeitet wird.

Sind im Kennfeldspeicher 9 Weg-Zeit-Diagramme abgelegt, welche den Ablauf der Scheibenwischerposition von der Nulllage über den Maximalausschlag und wieder zurück zur Nulllage wiedergeben, dann steuert der Regler 8 den Scheibenwischer 1 nach diesen Weg-Zeit-Diagrammen. Da der Kurvenverlauf dieser Diagramme beliebig festlegbar ist, kann man durch solche Diagramme für ein optimales Wischergebnis sorgen.

## Patentansprüche

1. Für ein Kraftfahrzeug bestimmter Scheibenwischer mit einem drehzahlüberwachten Wischermotor und mit einem Bedienelement zur Vorgabe eines gewünschten Wischmodus sowie einem zwischen dem Bedienelement und dem Wischermotor geschalteten Regler zum Regeln der Drehzahl des Wischermotors aufgrund von Sensorsignalen, **dadurch gekennzeichnet**, dass die Sensoren (4, 5, 6, 7) zum Erfassen von Umgebungseinflüssen ausgebildet sind und der Regler (8) zum Erzeugen eines Drehzahlbefehls in Abhängigkeit von diesen Umgebungseinflüssen ausgebildet ist.

2. Scheibenwischer nach Anspruch 1, **dadurch gekennzeichnet**, dass der Regler (8) mit einem Sensor (4) zur Erfassung der Geschwindigkeit des Kraftfahrzeugs verbunden ist.

3. Scheibenwischer nach Anspruch 1, **dadurch gekennzeichnet**, dass der Regler (8) mit einem Sensor zur Erfassung der Heftigkeit von Regen verbunden ist.

4. Scheibenwischer nach zumindest einem der vorangehenden Ansprüche, **dadurch gekennzeichnet,** dass der Wischermotor (2) zur Erfassung der Position des Scheibenwischers (1) und/oder zur Erfassung seiner Drehzahl einen als Inkrementgeber ausgebildeten Sensor (5) hat.

5. Scheibenwischer nach zumindest einem der vorangehenden Ansprüche, **dadurch gekennzeichnet**, dass der Regler (8) einen Kennfeldspeicher (9) mit Weg-Zeit-Diagrammen zur Erzeugung von Sollwerten für die Geschwindigkeit des Scheibenwischers (1) aufweist.
